Europäisches Patentamt

**European Patent Office**  (11) Publication number:  **0 265 361**

Office européen des brevets  **A2**

(12) **EUROPEAN PATENT APPLICATION**

(21) Application number: **87500067.1**

(22) Date of filing: **21.10.87**

(51) Int. Cl.⁴: **G 07 F 11/44**
G 07 F 9/10, A 23 L 1/18

(30) Priority: **22.10.86 ES 8600891**

(43) Date of publication of application:
**27.04.88 Bulletin 88/17**

(84) Designated Contracting States:
**AT BE CH DE FR GB GR IT LI LU NL SE**

(71) Applicant: **COIEX, S.A.**
**Pasaje Congost, 16**
**L'Hospitalet De Llobregat Barcelona (ES)**

(72) Inventor: **Galceran Martorell, Carlos**
**Anselmo Clavé, 8**
**Cornella De Llobregat (Barcelona) (ES)**

(74) Representative: **Toro Gordillo, Ignacio Maria**
**Viriato, 56**
**E-28010 Madrid (ES)**

(54) **Automatic popcorn dispensing machine.**

(57) The invention concerns an automatic popcorn dispensing machine which incorporates at its upper part a transparent deposit for the corn grains, with a filling cover and the corresponding lock, at its bottom a dosifier of the corn towards the mechanisms of conformation of the popcorns, to which mechanisms accedes an air current from the outside which, after the formation of the popcorns, impulses them through another conduit towards a deflector nozzle which supplies the finished product, being the mechanisms of the machine, not only those of dosification of the product but also those of elaboration of same, controlled by an electronic circuit which is activated after the introduction of a coin through the corresponding selector.

FIG.-3

**Description**

## OBJECT OF THE INVENTION

The present invention refers, as expressed in the title of this specificiation, to a popcorn dispensing machine, which has been designed to offer an automatic operation, so that as from a deposit which supplies the corn grains, and from the adequate dosifier, it is capable to conform and supply doses of popcorns to the potential users of the machine, by means of the simple introduction on the part of the latter, of one or more coins, corresponding to the price of each dose of conformed popcorns.

## ANTECEDENTS OF THE INVENTION

As it is known, for the elaboration of popcorns, it is enough with submitting the grain to a toasting or heating, so that their expansion takes place and their consequent conformation, into popcorns.

Apart from the various solutions adopted at home or individual level, on a business level machines are used, which, using in turn different heating means, allow the conformation of the popcorns, which machines, notwithstanding, require a manual participation in the process, which is equivalent to the need that each machine be assisted by an operator, with the consequent and negative repercussion of costs which this means.

## DESCRIPTION OF THE INVENTION

The machine which the invention proposes has been designed to carry out the process of dosification, con formation and supply of the popcorns in a fully automatic mode, that is, without the need for the machine to be assisted by an operator, in a way that it is the very same user of it who, due to the mere fact of introducing one or more coins, determines its start to operate and the integral development of its working program, and said machine requiring only the provisions which are unavoidable such as the tasks of maintenance to reload with corn the deposit of same, collect the coins introduced in it and effect periodical revisions of maintenance for its operational elements.

Therefor and in a more concrete mode, the machine preconized is made up by means of a housing, preferably prismatic-rectangular, on which upper base a deposit is established, at the same time preferably transparent, to allow an instant visualization of its contents, with the double function that the possible customer checks the existence of same, and that it be rapidly detected, on the side of its exploiter, the need of replacing said corn, being the cited deposit provided with a cover provided with locking means.

The upper base is configurated in a way that it results convergent towards its medium area, where it is established a dosifier which supplies unitarily the doses of product to the conformation mechanisms.

These conformation mechanisms consist in a hopper, in which the dosifier pours, which hopper, at its bottom, has a grate or perforated base, with a caliber sensibly smaller to that of the corn grains, said hopper being prolonged into a supporting body, which lies on the base of the housing, in which it is established at the same time a resistance or a set of electrical heating resistances, preferably comprised between the previously cited grate and a second grate, and at the same time, under the said resistance of heating, it is established a conduction of air inlet generated by a fan placed at one of the side walls of the housing.

Complementarily, on the nozzle of the hopper is coupled a conduction of outlet for the popcorns already conformed, which crossing the front wall of the housing, is riveted into a deflector nozzle, orientated downwards, for the collection of the popcorns.

On this same front wall of the housing, is placed a slot for introduction of coins and the corresponding outlet for returns or faulty coins, and on the inside, a selector mechanism, of any conventional type, capable to detect the validity of the coins introduced.

Said coin selector, after the introduction of a valid coin, sends a signal to an electronic circuit which provokes the starting to operate of the dosifier, for supply of a preset dose, to the conformation mechanisms, these mechanisms being put to operate simultaneously, that is, the heating resistances and the fan in charge of propulsing the popcorns, at the end of their conformation, towards the deflector nozzle, on the outside, for the collection of same.

Complementarily, it has been provided the existence of an audio circuit, in which the corresponding speaker participates, with which the machine reproduces a melody or any other informative or advertising message, either during the process of conformation of the popcorns, to distract the customer during his wait, or during the periods of inactivity, acting as a call for possible customers, and obviously being able to operate indistinctly in one case or the other, in accordance with the programming set forth to that purpose.

The housing of the machine is provided, besides the already cited access door to the deposit, for the reloading of same, with a small side door with a direct access to the coin collecting drawing, and with another side door with bigger sizes, which establishes a broad access to all its inner mechanisms.

## DESCRIPTION OF THE DRAWINGS

To complement the description which is being made and in order to help to a better undertstanding of the characteristics of the invention, it is enclosed to the present specification, as an integral part of same, a set of drawings in which, with an illustrative and non limitative character, the following has been represented:

Figure 1.- Shows a front view of an automatic popcorn dispensing machine, made in accordance with the object of the present invention.

Figure 2.- Shows another view of the same machine, opposite to that of the previous figure.

Figure 3.- Shows again a view of the machine, in a schematic representation in which the housing appears partially sectioned, showing some of its inner mechanisms.

Figure 4.- Shows a perspective view of the dosifier.

Figure 5.- Shows, finally, a side elevation and sectional schematic representation of the mechanisms of conformation of the popcorns.

PREFERENT EMBODIMENT OF THE INVENTION

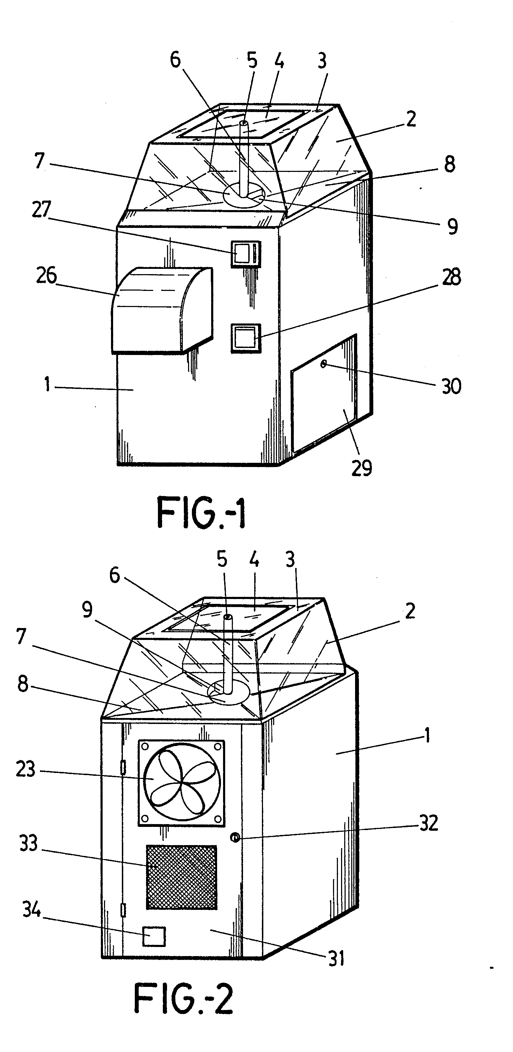

On view of these figures, it can be seen how the automatic popcorn dispensing machine which is preconized is made up as from a housing 1, preferably with a prismatic-rectangular configuration, on which upper base is established a deposit 2, of a transparent nature, which allows the direct visualization of its contents, which adopts in said example of practical performance, a frustum-pyramidal configuration, incorporating at its smaller free base 3, a cover 4, assisted by a locking mechanism 5 which fastens it to a shaft 6 which emerges from bottom of the deposit 2, at which bottom is centrally located an adjustable dosifier 7 regarding which the upper base 8 of the body or housing 1, converges, through inclined planes, as noted in detail in figures 1, 2 and 3.

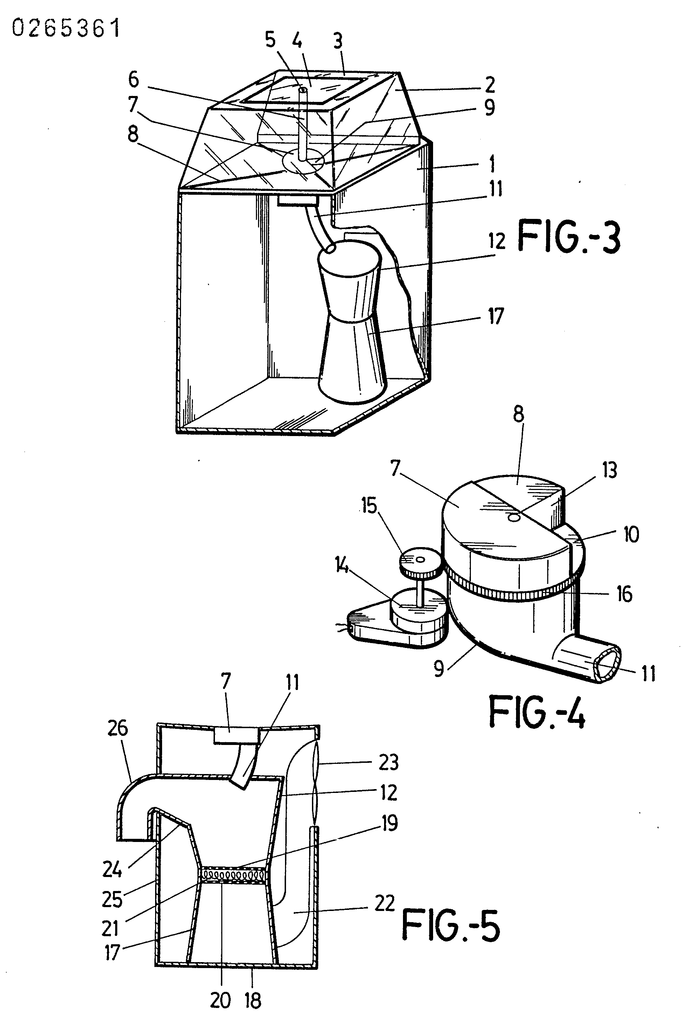

The cited dosifier, as in turn is noted in the details of figure 4, is made up by means of a fixed and hollow semi-cylinder 7, at which sine operates another rotating semi-cylinder 8, which rotates concretely by using as an axle, to that purpose, the cited shaft 6, these two semi-cylinders 7 and 8 ly-ing on a lower cylinder 9, hollow and with half 10 of its upper base opposite to the semi-cylinder 7 closed, its lower base being also closed and being extended laterally and lowerly into a conduction 11, through which the dosified corn is driven towards the hopper 12, of the popcorn conforming mechanisms.

Obviously, the cited semi-cylinder 8 may consist in a cylinder lacking a sector 13 of any size, according to the dose established to that purpose.

In any case, on each complete rotation of the semi-cylinder or cylindrical sector 8, it takes place the decantation of a dose of corn from the deposit 2 to the hopper 12.

This rotating movement of the dosifier is supplied to same by a moto-reducer 14, which outlet axle is associated with a pinion 15 which works on an indented crown 16 established between the fixed cylinders 7 and 9 and solidarized to the movable semi-cylinder 8.

The mechanisms of conformation of the popcorns, as noted in turn in figure 5, consist in a hopper 12, over which pours the previously cited conduction 11, which hopper remains superposed to a supporting body 17 which lies on the base 18 of the housing 1, and which is also hollow, being it established between the hopper 12 and the support 17, a first grate or perforated base 19, with a caliber evidently smaller than that of the corn grains, and a second grate 20, whilst between these two grates it is placed the resistance or set of electrical heating resistances 21 which are to generate the heat necessary so that the expansion of the corn grains be produced and as well their transformation into popcorns.

To the supporting body 17, under the set of resistances 21, there comes a channelling 22, which comes from the outside, concretely from the rear wall of the housing 1, in which it is established a fan 23 which blows air towards the bottom of the hopper 12, with flow enough as to provoke the dragging of the popcorns, once these are duly conformed, ejecting them from the hopper 12 by means of another conduction 24, which, crossing the front wall 25 of the housing 1, is riveted into a deflector nozzle 26, orientated downwards, through which the user of the machine may collect the popcorns, duly conformed.

As a complement of the structure described, the machine incorporates a control circuit, not represented in the figures, which governs the different operative elements of the machine, before a signal received by the introduction of a coin or group of coins in the machine, by means of a slot 27, after which is located a selector of coins of any conventional type, assisted by the corresponding outlet 28 for the return of coins, provoking said electronic circuit, after the introduction of the coin, the starting to work of the moto-reducer 14, so that the dosifier 7 may rotate 360° supplying a dose of corn, whilst at the same time it effects the connection of the heating resistances 21 and of the fan 23.

The coins admitted by the machine fall directly into a drawer, directly accessible from the outside through a door 29 provided with the corresponding lock 30, placed concretely at one of the side walls of the housing 1.

The fan 23 will be preferably located on a door 31 which occupies in its most part the rear wall of the housing 1, also provided with the corresponding lock 32, being it placed at this same door a speaker 33 and the unavoidable connection 34 of the machine to the network.

The cited speaker 33, as previously stated, belongs to an audio circuit, which allows the machine to reproduce a certain melody or any other informative or advertising message, during the process of conformation of the popcorns and/or during the periods of inactivity of the machine.

Thus, in accordance with the structuration described, and after the introduction of a coin on the part of the user, through the slot 27, said coin is checked by the selector associated to said slot, and in case same is considered as valid, the selector sends a signal to the electronic circuit of government of the machine, which activates the dosifier 7 so that a dose of corn existing in the deposit 2 falls through the conduit to the hopper 12, whilst at the same time the heating resistance 21 starts to work, generating the heat necessary for the formation of the popcorns, and the fan 23, so that, after the formation of said popcorns, same impulses them through the channelling 24 towards the deflector outlet nozzle 26, where they are collected by the user.

After the due timing, duly established to that purpose, the stopping of the machine will take place, same remaining under the conditions of repeating the working cycle described, when it receives a new coin.

It is not considered as necessary to make more extensive this description so that any expert in the subject may understand the scope of the invention and the advantages derived from same.

The materials, shape, size and disposition of the elements will be susceptible of variation provided it does not mean an alteration to the essentiality of the invention.

The terms under which this specification has been described must always be taken in a broad and not limitative sense.

## Claims

1.- AUTOMATIC POPCORN DISPENSING MACHINE, essentially characterized in that it is made up as from a housing, with a preferably prismatic rectangular configuration, on which upper base and as an ascending extension of same, is established a desposit which contains the corn grains, preferably of a transparent nature, to allow the visualization of its inside, which deposit is provided with the corresponding filling cover, assisted by the also corresponding lock, having it been provided that centrally on the upper base of the housing, that is, centrally on the base of the deposit, it be located a dosifier which supplies the corn to the mechanisms of conformation of the popcorns, to which mechanisms accedes an outer air current, and from which it emerges a conduit which, crossing the front wall of the housing, is riveted into a deflector nozzle for the supply of the finished product, with the particularity that the starting to work of these operative elements is determined by the introduction of a coin, to which purpose the machine incorporates in its front wall a slot of introduction of coins, operatively opposed to the corresponding selector mechanism, which and after the detection of the coin as valid, sends a signal to an electronic circuit of government of the dosifier and of the mechanisms of conformation of the popcorns.

2.- AUTOMATIC POPCORN DISPENSING MACHINE, as per claim 1, characterized in that the upper base of the housing or bottom of the deposit, converges towards the medium area where the dosifier is located, and the latter incorporates a fixed and hollow semi-cylinder, at which sine works a movable cylinder, lacking a sec tor volumetrically in accordance with the dose to be supplied, which movable cylinder is provided at its periphery with an indented crown through which it gets the movement of a pinion associated to a moto-reducer, this assembly being located over a fixed lower cylinder, hollow, provided with a channelling for outlet of the dosified product to-wards the conformation mechanisms.

3.- AUTOMATIC POPCORN DISPENSING MACHINE, as per the previous claims, characterized in that the mechanisms of conformation of the popcorns consist in a hopper, to which gets the conduit coming from the dosifier, which hopper lies in turn on a hollow supporting body, being placed between hopper and supporting body two parallel grates, of which the upper one constitutes a perforated base for the hopper, with a caliber smaller than the size of the corn grains and between which grates is located a resistance or set of heating electrical resistances, acceding to the lower supporting body, under said grates, the air channelling coming from a fan located at the rear wall of the housing, whilst at the outlet of the said hopper is coupled another channelling riveted into the front deflector nozzle for the outlet of the popcorns, and through which channelling said popcorns are impulsed, at the end of the phase of conformation, by the air current generated by the fan.

4.- AUTOMATIC POPCORN DISPENSING MACHINE, as per the previous claims, characterized in that the axle of rotation of the dosifier is prolonged vertically and upwardly in the sine of the deposit, until reaching the upper base of same, materialized in the filling door of said deposit, which door is provided with a lock which actuates on the end of the shaft that makes up the cited axle, having it provided besides that the housing incorporates a side door, with its corresponding lock, of a direct access to the coin collector drawer, and an ample door on its rear wall, also with its corresponding lock, in which it is preferably located the fan and the elements of connection to the network of said machine.

5.- AUTOMATIC POPCORN DISPENSING MACHINE, as per the previous claims, characterized in that this rear door of the housing also has a speaker, belonging to an audio circuit, capable to reproduce a certain melody or any other type of acoustic, informative or advertising message, during the operative process of the machine and/or during the periods of time in which same is inoperative.

0265361

FIG.-1

FIG.-2

0265361

FIG.-3

FIG.-4

FIG.-5